# EUROPEAN PATENT SPECIFICATION

(11) **EP 3 945 236 B1**
(45) Date of publication and mention of the grant of the patent: **24.05.2023**
(21) Application number: 21183766.1
(22) Date of filing: 05.07.2021
(51) Int. Cl.: F16N 11/00, F16N 21/04, B67D 7/04, F16L 37/34, F16L 37/56

(54) **FEMALE COUPLING FOR GREASE**
BUCHSENKUPPLUNG FÜR FETT
RACCORD FEMELLE POUR LA GRAISSE

(30) Priority: 28.07.2020 IT 202000018298
(43) Date of publication of application: 02.02.2022
(73) Proprietor: FASTER S.r.l., 26027 Rivolta d'Adda (IT)
(72) Inventor: RUSCONI, Paolo, 26027 Rivolta d'Adda (CR) (IT); DEBERNARDI, Enrico, 26027 Rivolta d'Adda (CR) (IT); DI GIOVANNI, Giordano, 20062 Cassano d'Adda (MI) (IT)
(74) Representative: Lualdi, Lorenzo

(56) References cited:
- WO-A1-2016/071536
- GB-A- 717 702
- US-A- 3 211 178
- US-A1- 2007 289 645
- US-A1- 2009 051 161

## Description

### FIELD OF THE INVENTION

The present invention relates to a female cartridge coupling for grease optimized for use in the hydraulic system of machines, in particular earth-moving machines and the like.

### STATE OF THE ART

Couplings for grease of the type considered herein are known in the art. In particular, the same applicant produces multi-coupling plate connections, known on the market under the trade-name of MultiFaster, which allow the simultaneous connection of multiple hydraulic lines. US2009/051161 A1 and GB717702 A describe other known examples of couplings.

Generally, on earth-moving machines or the like, the lubrication system comprises a specific circuit that is fed with grease on the operating machine side.

In order to functionally connect the hydraulic circuit of the machine to the user, at least one forward and one return hydraulic power line are provided, therefore a total of at least two power lines, and optionally a drainage line.

The connection of the hydraulic power and drainage lines is effected by means of quick couplings, which in the state of the art are connected manually by the operator or by means of cartridges inserted in the fixed plate (machine side) of the MultiFaster connection which allows the simultaneous connection of the plurality of couplings/cartridges of the two plates.

These multi-coupling plate devices of the known type are generally used for making a plurality of connections simultaneously, even in the presence of residual pressure in the lines thanks to decompression systems specifically provided, and have the advantage of avoiding risks of connection errors due, for example, to the inversion of the lines by the operator who is handling the individual connections.

The lubrication system on board the machine generally comprises a grease pump which is operated cyclically, i.e. at predefined time intervals, for example with a functioning period of 30-60 seconds every 5-10 minutes.

The actuation of the pump is therefore automated and the lubrication system is always functioning, not only when a user is connected to the machine, but also when the user is not connected.

As a result of this, it is not possible to use a known type of coupling for conveying the grease, as they do not provide a fluid recirculation function, in this case grease, and therefore problems of overpressures and/or leakages of grease in the circuit would arise.

The objective of the present invention is therefore to provide a female coupling for grease that can be used in the hydraulic system of machines, both in use in multi-coupling devices of the type described above, and also in manual coupling operations.

More specifically, the undertaking of the present invention is to provide a female coupling for grease that allows the grease to be recirculated in the lubrication circuit when the coupling is disconnected.

### SUMMARY OF THE INVENTION

In the light of what is specified above, the undertaking of the present invention is to provide a female cartridge coupling for grease for connecting a lubrication line to the hydraulic system of earth-moving machines or the like, capable of allowing the grease to be recirculated on the machine side.

Within this undertaking, the objective of the present invention is to provide a female coupling for grease suitably configured for being inserted in a plate of a multi-connection plate device and easily configurable so that it can be used as a manual coupling cartridge.

The above-mentioned undertaking, as also the above-mentioned objectives and others that will become more evident further on, are achieved by a female coupling for grease for connection to the hydraulic system of earth-moving machines or the like according to claim 1.

Other features of the female coupling for grease according to the present invention are indicated in the dependent claims, which also form an integral part of this description.

### LIST OF FIGURES

Further features and advantages will become more evident from the description of preferred but non-exclusive embodiments of the quick coupling for grease according to the present invention, illustrated by way of non-limiting example with the aid of the attached drawings in which:
- figure 1 shows a sectional side view of the coupling according to the present invention inserted in a multi-connection of the plate type and in a disconnected phase;
- figure 2 shows the same sectional side view as figure 1 in which the coupling is in a connected phase;
- figure 3 shows an enlargement of figure 1 relating to the area of the by-pass channel, in which the open by-pass channel can be seen;
- figure 4 shows an enlargement of figure 2 relating to the area of the by-pass channel, in which the closed by-pass channel can be seen;
- figure 5 shows a sectional side view of an alternative embodiment of the coupling according to the present invention in which it is configured for a manual coupling.

### DETAILED DESCRIPTION OF THE INVENTION

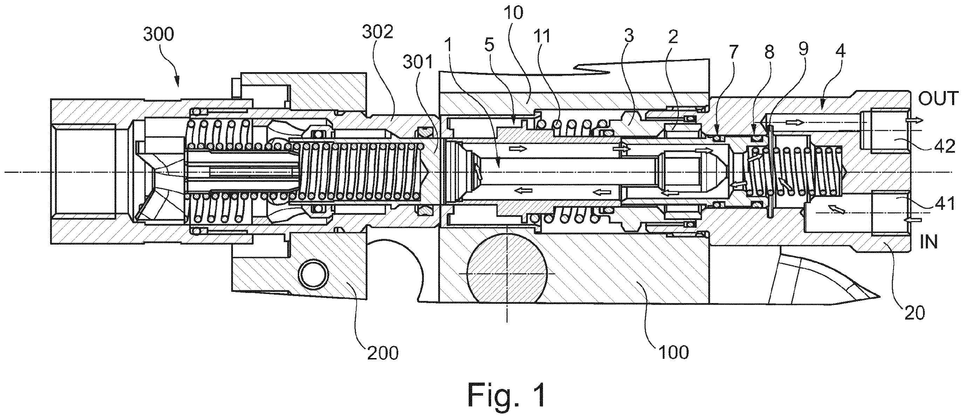

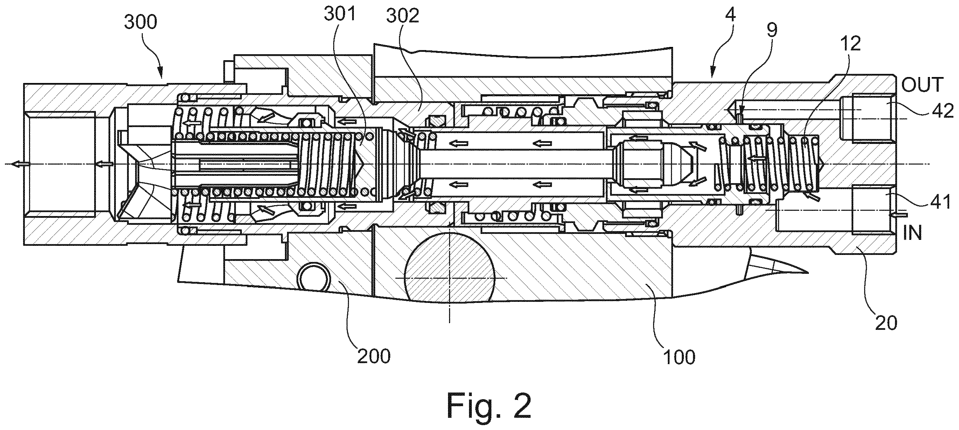

With particular reference to the attached figures 1 and 2, the female coupling for grease according to the present invention, in the cartridge configuration which can be inserted in a multi-connection device of the fixed **100** and movable **200** plate type, comprises an external body **10** which can also be composed of the same fixed plate **100,** comprising a cylindrical cavity within which a front slider **5** and a rear slider **6** are coaxially arranged, axially movable with respect to said external body **10,** advantageously movable against the action of first **11** and second **12** thrust means, advantageously composed of helical springs.

An internal body **3** is mounted inside said external body **10,** coaxial with respect to the latter.

A pair of half-shells **2** are fixed between said internal body **3** and a rear adapter **4** which is connected to said internal body **3** by means of a threaded connection.

The two half-shells **2** keep the sealing valve **1** in position, supported by the relative valve body, which frontally closes the coupling when it is disconnected, as in the configuration of figure 1.

The rear adapter **4** advantageously comprises a body **4a** within which an inlet duct **41** and an outlet duct **42** are formed for the grease.

Said inlet duct **41** and said outlet duct **42,** also indicated respectively with **IN** and **OUT** in figures 1 and 2, more preferably comprise threaded connections.

On the axially movable rear slider **6,** sealing elements are advantageously provided which selectively open or close the by-pass channel **9** between the inlet duct **41** and the outlet duct **42.**

Said sealing elements can preferably comprise one or more sealing gaskets **7,** or a ring coupled with an anti-extrusion ring, and one or more shaped polyurethane gaskets **8.**

In the embodiment shown by way of example in figures 1 and 2, a single shaped polyurethane gasket **8** is provided inside a receiving seat formed on the external surface of the rear slider **6,** so that said gasket **8** faces the internal surface of the adapter body **4.**

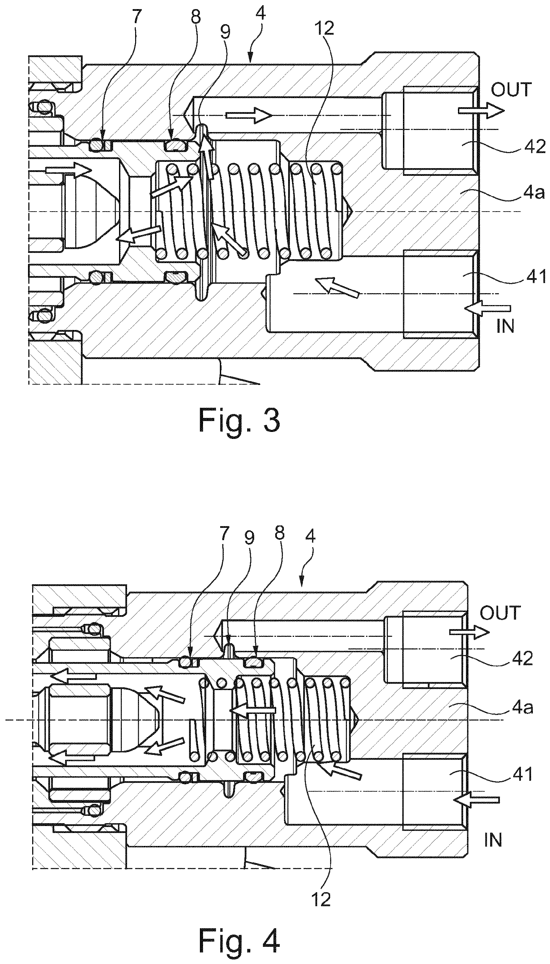

In particular, it is the sealing elements **7** and **8,** and even more particularly the shaped gasket **8** which, with its position with respect to the adapter body **4,** causes the opening or closing of the by-pass channel **9** which allows recirculation of the grease between the inlet duct **41** and the outlet duct **42,** consequently recirculating the grease in the circuit on the machine side (by-pass **9** open as in figure 1 and in the enlargement of figure 3) or conveying the grease to the user through the male connection on the user side (by-pass **9** closed as in figure 2 and in the enlargement of figure 4).

The polyurethane gasket **8** has been advantageously configured for preventing the extrusion of the gasket during the passage on the by-pass channel **9** when there is pressure in the system.

The functioning of the female coupling for grease according to the present invention is as follows.

With reference to figure 1, when the female coupling is mounted on the fixed plate **100** of a multi-connection, the rear adapter **4** is fixed to the external body **10** and to the internal body **3,** and the sealing valve **1** is kept in position by the pair of half-shells **2.**

As can be seen from the observation in figure 1, in this configuration, in which the coupling is decoupled, the pressurized grease can enter from the inlet duct **41** and, as shown in figure 1 by the arrows, pass through the coupling. Finding the sealing valve **1** closed, the grease will fill the inside of the coupling to pass through the by-pass channel **9** and exit from the outlet duct **42.**

When the female coupling according to the present invention is connected to a male coupling **300,** which according to what is shown in figures 1 and 2 can be supported by the movable plate **200** of a plate multi-connection of the known type, the internal body **301** of the male coupling is frontally abutted against the sealing valve **1** and is held in position by the same whereas the pushing action on the external body **302** of the male **300** causes the backward movement of the front **5** and rear **6** sliders axially movable with respect to the external body **10** of the female coupling.

When the connection is completed, as shown in figure 2, the retraction of the front slider **5** causes the valve **1** of the female coupling to open and the grease to pass along the path of the arrows in figure 2, whereas the by-pass **9** provided on the rear adapter **4** is closed by the retraction of the rear slider **6.**

When it is in the rear position of figure 2, translating towards the rear part of the coupling, it advantageously brings the shaped polyurethane gasket **8** into a rear position with respect to the by-pass channel **9,** and the sealing gasket **7,** or a ring plus anti-extrusion ring, in a front position with respect to the by-pass channel **9,** so that said by-pass channel is inaccessible to the grease.

In this connected-coupling configuration, therefore, the by-pass channel **9** is completely excluded and there is the connection of the lubrication line and the passage of the grease.

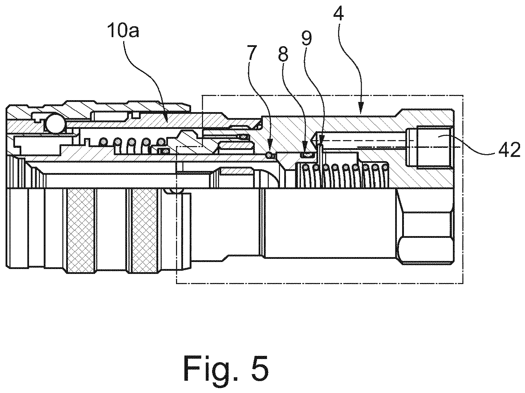

With reference to figure 5, a variant embodiment of the female coupling for grease according to the present invention provides for coupling the elements of the coupling described above with reference to figures 1 and 2, with the exception of the external body **10**, with a ½" coupling for manual connections, generically indicated with the reference number **10a** in figure 3.

In this way, all the functions described above in relation to the use of the cartridge coupling in a so-called MultiFaster multi-connection will also be available for the coupling to be connected manually.

It has thus been shown how the female coupling for grease according to the present invention allows the undertaking to be accomplished, and the objectives set by the invention itself to be achieved.

More specifically, from the description provided, it can be understood how the female coupling according to the present invention allows the grease coming from the lubrication line on the machine side to be recirculated when the coupling is disconnected, and the by-pass channel which creates the recirculation when the coupling is coupled with a corresponding male coupling, to be automatically closed, in a completely automatic way and without requiring any intervention by the operator.

Furthermore, the female coupling according to the present invention can be easily adapted for being used either as a cartridge inserted in the fixed plate, on the machine side, of a plate multi-connection, or in a single coupling body for manual coupling.

The present invention has been described, for illustrative but non-limiting purposes, according to preferred embodiments, but it should be understood that variations and/or modifications can be applied by a skilled person in the field, without thereby departing from the scope of the enclosed claims.

## Claims

1. Female quick coupling for connecting a lubrication line suitable for transporting the grease, said coupling comprising an external body (10, 10a) and a front valve (1) adapt to operate the fluid closure of said coupling, the coupling further comprising a front slider (5) and a rear slider (6) arranged coaxial inside said external body (10, 10a) and axially movable with respect to it, **characterized in that** it further comprises a rear adapter body (4) in turn comprising a grease inlet duct (41) and a grease outlet duct (42) and a by-pass duct (9) formed inside the body (4a) of said rear adapter (4) and able to realize a fluid connection between said inlet (41) and outlet (42) ducts, and **in that** said rear slider (6) is configured so as to selectively open or close said by-pass channel (9), and **in that** said by-pass channel (9) obtained in said body (4a) of said rear adapter (4) has an annular configuration.

2. Female quick coupling according to the preceding claim, **characterized in that** said rear slider (6) further comprises sealing elements (7, 8) adapted to selectively provide the fluid seal between said rear slider (6) and said body (4a) of said rear adapter (4).

3. Female quick coupling according to claim 2, **characterized in that** said sealing elements (7, 8) are placed inside dedicated seats obtained on the external surface of said rear slider (6) so as to face towards the internal surface of said body (4a) of said adapter (4) on which said by-pass channel (9) is obtained.

4. Female quick coupling according to one or more of the preceding claims, **characterized in that** said by-pass channel (9) is obtained in said body (4a) of said rear adapter (4) and has an annular configuration.

5. Female quick coupling according to one or more of the preceding claims, when they depend on claim 2, **characterized in that** said sealing elements (7, 8) comprise one or more sealing gaskets (7) and one or more shaped polyurethane gaskets (8).

6. Female quick coupling according to the preceding claim, **characterized in that** said one or more sealing gaskets (7) comprise an o-ring coupled to an anti-extrusion ring.

7. Female quick coupling according to one or more of the preceding claims, when they depend on claim 2, **characterized in that** said sealing elements (7, 8) are positioned on said rear slider (6) in such a way that when said rear slider (6) is located in said first advanced position corresponding to a condition of disconnected coupling, said sealing elements (7, 8) are positioned upstream of said by-pass channel (9) with respect to said outlet pipe (42), and grease will fill the inside of the coupling to pass through the by-pass channel (9) and exit from the outlet duct (42), while when said rear slider (6) is located in said second rear position corresponding to a coupled coupling condition, said sealing elements (7, 8) are positioned upstream said by-pass channel (9) preventing the access of grease to said channel.

8. Female quick coupling according to one or more of the preceding claims, **characterized in that** it is configured as a cartridge so that it can be inserted into a plate (100) of a multi-connection device, said plate (100) acting as external body (10 ).

9. Female quick coupling according to one or more of claims 1 to 8, **characterized in that** it is configured as a coupling for manual connections, said external body (10a) being constituted by a single coupling, preferably a 1/2" (half inch) coupling.

10. Female quick coupling according to one or more of the preceding claims, **characterized by** the fact that said inlet (41) and outlet (42) conduits include threaded connections.

## Patentansprüche

1. Buchsenschnellkupplung zum Verbinden einer Schmierleitung, die zum Transportieren des Schmierfetts geeignet ist, wobei die Kupplung einen Außenkörper (10, 10a) und ein vorderes Ventil (1) umfasst, das angepasst ist, um den Fluidverschluss der Kupplung zu betätigen, wobei die Kupplung ferner einen vorderen Schieber (5) und einen hinteren Schieber (6) umfasst, die koaxial innerhalb des Außenkörpers (10, 10a) angeordnet sind und in Bezug auf diesen axial beweglich sind, **dadurch gekennzeichnet, dass** sie ferner einen hinteren Adapterkörper (4) umfasst, der wiederum einen Fetteinlasskanal (41) und einen Fettauslasskanal (42) und einen Bypasskanal (9) umfasst, der innerhalb des Körpers (4a) des hinteren Adapters (4) ausgebildet ist und in der Lage ist, eine Fluidverbindung zwischen dem Einlasskanal (41) und dem Auslasskanal (42) herzustellen, und dadurch, dass der hintere Schieber (6) konfiguriert ist, um den Bypasskanal (9) selektiv zu öffnen oder zu schließen, und dadurch, dass der Bypasskanal (9), der in dem Körper (4a) des hinteren Adapters (4) erhalten ist, eine ringförmige Konfiguration aufweist.

2. Buchsenschnellkupplung nach dem vorhergehenden Anspruch, **dadurch gekennzeichnet, dass** der hintere Schieber (6) ferner Dichtungselemente (7, 8) umfasst, die dazu angepasst sind, selektiv die Fluiddichtung zwischen dem hinteren Schieber (6) und dem Körper (4a) des hinteren Adapters (4) bereitzustellen.

3. Buchsenschnellkupplung nach Anspruch 2, **dadurch gekennzeichnet, dass** die Dichtungselemente (7, 8) innerhalb von dedizierten Sitzen angeordnet sind, die auf der Außenfläche des hinteren Schiebers (6) erhalten sind, so dass sie der Innenfläche des Körpers (4a) des Adapters (4), auf dem der Bypasskanal (9) erhalten ist, zugewandt sind.

4. Buchsenschnellkupplung nach einem oder mehreren der vorhergehenden Ansprüche, **dadurch gekennzeichnet, dass** der Bypasskanal (9) in dem Körper (4a) des hinteren Adapters (4) erhalten ist und eine ringförmige Konfiguration aufweist.

5. Buchsenschnellkupplung nach einem oder mehreren der vorhergehenden Ansprüche, wenn sie von Anspruch 2 abhängen, **dadurch gekennzeichnet, dass** die Dichtungselemente (7, 8) eine oder mehrere Dichtungen (7) und eine oder mehrere geformte Polyurethandichtungen (8) umfassen.

6. Buchsenschnellkupplung nach dem vorhergehenden Anspruch, **dadurch gekennzeichnet, dass** die eine oder mehreren Dichtungen (7) einen O-Ring umfassen, der mit einem Anti-Extrusionsring gekoppelt ist.

7. Buchsenschnellkupplung nach einem oder mehreren der vorhergehenden Ansprüche, wenn sie von Anspruch 2 abhängen, **dadurch gekennzeichnet, dass** die Dichtungselemente (7, 8) auf dem hinteren Schieber (6) positioniert sind, sodass, wenn sich der hintere Schieber (6) in der ersten vorgeschobenen Position befindet, die einem Zustand der gelösten Kupplung entspricht, die Dichtungselemente (7, 8) stromaufwärts des Bypasskanals (9) in Bezug auf das Auslassrohr (42) positioniert sind, und Schmierfett das Innere der Kupplung füllt, um durch den Bypasskanal (9) durchzulaufen und aus dem Auslasskanal (42) auszutreten, während, wenn sich der hintere Schieber (6) in der zweiten hinteren Position befindet, die einem Zustand der gekuppelten Kupplung entspricht, die Dichtungselemente (7, 8) stromaufwärts des Bypasskanals (9) positioniert sind, um den Zugang von Schmierfett zu dem Kanal zu verhindern.

8. Buchsenschnellkupplung nach einem oder mehreren der vorhergehenden Ansprüche, **dadurch gekennzeichnet, dass** sie als Kartusche konfiguriert ist, so dass sie in eine Platte (100) einer Mehrfachverbindungsvorrichtung eingesetzt werden kann, wobei die Platte (100) als Außenkörper (10) dient.

9. Buchsenschnellkupplung nach einem oder mehreren der Ansprüche 1 bis 8, **dadurch gekennzeichnet, dass** sie als Kupplung für manuelle Verbindungen konfiguriert ist, wobei der Außenkörper (10a) aus einer einzigen Kupplung, vorzugsweise eine 1/2"-Kupplung (halben Zoll), besteht.

10. Buchsenschnellkupplung nach einem oder mehreren der vorhergehenden Ansprüche, **dadurch gekennzeichnet, dass** die Einlassleitung (41) und Auslassleitung (42) Gewindeverbindungen einschließen.

## Revendications

1. Raccord rapide femelle pour le raccordement d'une ligne de lubrification apte à transporter la graisse, ledit raccord comprenant un corps externe (10, 10a) et une soupape avant (1) conçue pour actionner la fermeture fluidique dudit raccord, le raccord comprenant en outre un coulisseau avant (5) et un coulisseau arrière (6) disposés coaxialement à l'intérieur dudit corps externe (10, 10a) et mobiles axialement par rapport à celui-ci, **caractérisé en ce qu'**il comprend en outre un corps d'adaptateur arrière (4) comprenant à son tour un conduit d'entrée de graisse (41) et un conduit de sortie de graisse (42) et un conduit de dérivation (9) formé à l'intérieur du corps (4a) dudit adaptateur arrière (4) et apte à réaliser un raccord fluidique entre lesdits conduits d'entrée (41) et de sortie (42), et **en ce que** ledit coulisseau arrière (6) est configuré de manière à ouvrir ou fermer sélectivement ledit canal de dérivation (9), et **en ce que** ledit canal de dérivation (9) obtenu dans ledit corps (4a) dudit adaptateur arrière (4) a une configuration annulaire.

2. Raccord rapide femelle selon la revendication précédente, **caractérisé en ce que** ledit coulisseau arrière (6) comprend en outre des éléments d'étanchéité (7, 8) conçus pour assurer sélectivement l'étanchéité au fluide entre ledit coulisseau arrière (6) et ledit corps (4a) dudit adaptateur arrière (4).

3. Raccord rapide femelle selon la revendication 2, **caractérisé en ce que** lesdits éléments d'étanchéité (7, 8) sont placés à l'intérieur de sièges dédiés obtenus sur la surface externe dudit coulisseau arrière (6) de manière à faire face à la surface interne dudit corps (4a) dudit adaptateur (4) sur lequel ledit canal de dérivation (9) est obtenu.

4. Raccord rapide femelle selon une ou plusieurs des revendications précédentes, **caractérisé en ce que** ledit canal de dérivation (9) est obtenu dans ledit corps (4a) dudit adaptateur arrière (4) et a une configuration annulaire.

5. Raccord rapide femelle selon une ou plusieurs des revendications précédentes, lorsqu'elles dépendent de la revendication 2, **caractérisé en ce que** lesdits éléments d'étanchéité (7, 8) comprennent un ou plusieurs joints d'étanchéité (7) et un ou plusieurs joints en polyuréthane façonnés (8).

6. Raccord rapide femelle selon la revendication précédente, **caractérisé en ce que** lesdits un ou plusieurs joints d'étanchéité (7) comprennent un joint torique couplé à une bague anti-extrusion.

7. Raccord rapide femelle selon une ou plusieurs des revendications précédentes, lorsqu'elles dépendent de la revendication 2, **caractérisé en ce que** lesdits éléments d'étanchéité (7, 8) sont positionnés sur ledit coulisseau arrière (6) de telle manière que lorsque ledit coulisseau arrière (6) est situé dans ladite première position avancée correspondant à un état de raccord découplé, lesdits éléments d'étanchéité (7, 8) sont positionnés en amont dudit canal de dérivation (9) par rapport audit conduit de sortie (42), et la graisse remplit l'intérieur du raccord pour passer à travers le canal de dérivation (9) et sortir du conduit de sortie (42), tandis que lorsque ledit coulisseau arrière (6) est situé dans ladite seconde position arrière correspondant à un état de raccord couplé, lesdits éléments d'étanchéité (7, 8) sont positionnés en amont dudit canal de dérivation (9) empêchant l'accès de la graisse audit canal.

8. Raccord rapide femelle selon une ou plusieurs des revendications précédentes, **caractérisé en ce qu'**il est configuré comme une cartouche de manière à pouvoir être inséré dans une plaque (100) d'un dispositif à multiples raccordements, ladite plaque (100) faisant office de corps externe (10).

9. Raccord rapide femelle selon une ou plusieurs des revendications 1 à 8, **caractérisé en ce qu'**il est configuré comme un raccord pour des raccordements manuels, ledit corps externe (10a) étant constitué d'un seul raccord, de préférence un raccord 1/2" (un demi-pouce).

10. Raccord rapide femelle selon une ou plusieurs des revendications précédentes, **caractérisé par le fait que** lesdits conduits d'entrée (41) et de sortie (42) comportent des raccords filetés.
